# EUROPÄISCHE PATENTSCHRIFT

(11) **EP 1 359 350 B1**
(45) Veröffentlichungstag und Bekanntmachung des Hinweises auf die Patenterteilung: **30.05.2007**
(21) Anmeldenummer: 03009106.0
(22) Anmeldetag: 19.04.2003
(51) Int. Cl.: F16H 63/32

(54) **Befestigung einer Schaltgabel**
Attachment of a shift fork
Fixation de fourchette de boîte de vitesses

(30) Priorität: 04.05.2002 DE 10220062
(43) Veröffentlichungstag der Anmeldung: 05.11.2003
(73) Patentinhaber: Schaeffler KG, 91074 Herzogenaurach (DE)
(72) Erfinder: Grote, Stephan, 91522 Ansbach (DE); Schübel, Rainer, 91589 Aurach (DE); Steinberger, Wolfgang, 91074 Herzogenaurach (DE)

(56) Entgegenhaltungen:
- DE-C1- 19 940 628

## Beschreibung

Die Erfindung betrifft die Befestigung einer Schaltgabel an einem entlang einer Längsachse verschiebbaren Schaltelement, wobei die Befestigung die Schaltgabel längs fest sowie zu einer Schwenkachse schwenkbar an dem Schaltelement hält und die Befestigung zumindest
- aus einer zur Schaltgabel festen sowie an einer der Schaltgabel abgewandten Seite des Schaltelementes anliegenden ersten Führungsfläche,
- aus einer an dem Schaltelement gegenüber der ersten Führungsfläche anliegenden sowie zur Schaltgabel festen zweiten Führungsfläche und
- aus wenigstens einem seitlich an dem Schaltelement angeordneten, dabei zu der Schwenkachse parallel verlaufenden, sowie zu zumindest einer der Führungsflächen festen Anschlag
gebildet ist, und wobei zwischen einer dem Anschlag zugewandten Fläche des Schaltelementes und dem Anschlag ein Spiel vorgesehen ist, wodurch der Anschlag um einen begrenzten Winkel um die Schwenkachse schwenkbar ist und wodurch die Befestigung die Schaltgabel um die Schwenkachse relativ zu dem Schaltelement um den begrenzten Winkel schwenkbar führt.

### Hintergrund der Erfindung

In DE 199 40 628 C1 ist eine derartige Befestigung beschrieben. Eine Schaltgabel ist an einer Schaltschiene eines Kraftfahrzeuggetriebes befestigt. Die Schaltgabel ist durch einen rechtwinklig zur Längsachse der Schaltschiene gerichteten Schwenkzapfen längs festgelegt, jedoch um den Schwenkzapfen um einen geringen Winkel relativ zur Schaltschiene verschwenkbar. Die Schaltgabel weist dazu eine Befestigung mit einem Aufnahmevorsprung für die Aufnahme der Schaltschiene auf. An dem Aufnahmevorsprung sind zwei gegenüberliegende zueinander planparallele Führungsflächen ausgebildet. Die Führungsflächen nehmen dabei die Schaltschiene so zwischen sich, dass eine der Führungsfläche an einer der Schaltgabel abgewandten Seite der Schaltschiene und die andere Führungsfläche an der zur Schaltgabel gewandten Seite der Schaltschiene anliegt. Die Schaltgabel ist mittels der Führungsfläche an der Befestigung um den senkrecht zu den Führungsflächen stehenden Schwenkzapfen schwenkbar geführt. Die Führungsflächen sind mittels eines Steges miteinander verbunden. Der Steg führt dabei seitlich und parallel zu der Schwenkachse des Schwenkzapfens ausgerichtet an der Schaltschiene vorbei. Zwischen der dem Steg zugewandten Fläche der Schaltschiene und dem Steg ist ein Spiel vorgesehen. Durch das Spiel ist der Steg um einen begrenzten und definierten Winkel um die Schwenkachse des Schwenkzapfens schwenkbar. Dadurch ist die Befestigung der Schaltgabel um die Schwenkachse relativ zu dem Schaltelement um diesen Winkel schwenkbar. Der Steg dient dabei als Anschlag zur Begrenzung des Winkels.

### Zusammenfassung der Erfindung

Zu dem Zeitpunkt, an dem die Erfindung gemacht wurde, bestand die Aufgabe, eine Befestigung für eine Schaltgabel zu schaffen, die mit einer Schaltgabel kostengünstig für die Großserien- und Massenproduktion zum größten Teil aus Blech herstellbar ist.

Diese Aufgabe wurde nach dem Gegenstand des kennzeichnenden Teils des Anspruchs 1 dadurch gelöst, dass die Befestigung zwei Paare sich einander gegenüberliegender sowie das Schaltelement zwischen sich nehmende der Anschläge aufweist. Die Anschläge eines Paares liegen in Längsrichtung längs nebeneinander und jeder der einzelnen Anschläge ist mit gleichem Abstand zu der Schwenkachse angeordnet. Dabei greift zumindest jeweils einer der Anschläge eines Paares wenigstens teilweise in eine zumindest seitlich des Schaltelementes eingebrachte und gleichgerichtet mit der Schwenkachse verlaufende Nut des Schaltelementes ein. Der Anschlag ist in der Nut an jeweils einer zumindest linienförmig ausgebildeten sowie in Richtung des Anschlages konvexen und dabei durch einen rechtwinklig von der Schwenkachse abgehenden Radius beschriebenen Flanke des Schaltelementes entlang zu dem Schaltelement schwenkbar. Das Schaltelement ist seitlich somit von jeweils einem Paar der erfindungsgemäßen Anschläge und oben sowie unten von jeweils einer Führungsfläche umgriffen. Mit den Anschlägen ist die Schaltgabel längs fest an dem Schaltelement gehalten. Gleichzeitig dienen die Anschläge zur Begrenzung des Schwenkwinkels. Einen Schwenkbolzen, dessen Mittelachse die Schwenkachse ist, gibt es in der erfindungsgemäßen Befestigung nicht. Eine derartige Befestigung ist sowohl für Schaltwellen mit kreisrundem Querschnitt als auch für Schaltwellen mit rechteckigem bzw. quadratischem Querschnitt einsetzbar. An Schaltwellen mit kreisrundem Querschnitt ist die Nut beispielsweise eine Ringnut. Die Schaltgabel ist dann um die Längs- und gleichzeitig Mittelachse des Schaltelementes schwenkbar jedoch längs fest zu dem Schaltelement angeordnet. Mit einer derartigen Befestigung sind unter Umständen auch Toleranzen, beispielsweise ein Versatz zwischen der Mittenachse der Getriebewelle mit den Zahnrädern und dem Schaltelement, ausgleichbar.

Eine Ausgestaltung der Erfindung sieht vor, dass jedem der Anschläge ein Vorsprung an dem Schaltelement gegenüberliegt, gegen den der Anschlag maximal um ein durch das Spiel vorgegebenes Bogenmaß schwenkbar ist. Ein derartiger Vorsprung ist beispielsweise durch eine in Schwenkrichtung liegende Wandung der Nut gebildet.

Eine weitere Ausgestaltung der Erfindung sieht vor, dass jeder der Anschläge ein zylindrisch ausgebildeter Stift ist. Die Mittelachse des Stiftes verläuft parallel zu der Schwenkachse. Als Stifte sind beispielsweise Normteile, wie Passstifte einsetzbar.

Es ist weiter vorgesehen, dass die Schwenkachse, um die die Schaltgabel schwenkt, quer zur Längsachse des Schaltelementes ausgerichtet ist und dabei die Längsachse des Schaltelementes schneidet. Die Führungsflächen liegen dabei an einer im Querschnitt in Richtung der Führungsflächen konvex gewölbten Kontur des Schaltelementes, beispielsweise eines Schaltelementes mit rundem Querschnitt, oder an einer planparallelen Kontur des Schaltelementes an. Wie anfangs erwähnt, sind Schaltelemente mit rundem als auch mit rechteckigem Querschnitt einsetzbar. Denkbar ist auch, ein Schaltelement mit rundem Querschnitt im Bereich der Befestigung mit zwei planparallelen zu den Führungsflächen korrespondierenden Konturen zu versehen. Es ist auch denkbar, Schaltwellen beliebigen geometrischen Querschnitts zu verwenden, insbesondere dann, wenn das Schaltelement im Bereich der Befestigung den Führungsflächen angepasste planparallele Konturen aufweist. Die Nuten und planparallelen Konturen sind vorzugsweise durch spanloses Umformen in das Schaltelement eingebracht. Es ist auch eine Ausarbeitung der Konturen und Nuten durch spanabhebende Verfahren bzw. Kombinationen von spanabhebenden und spanlosen Fertigungsverfahren denkbar.

In weiteren Ausgestaltungen der Erfindung ist vorgesehen, dass zumindest die erste Führungsfläche an einer Platte ausgebildet ist. Die Platte liegt an der von der Schaltgabel abgewandten Seite des Schaltelementes an. Es ist denkbar, dass die zweite Führungsplatte ebenfalls an einer derartigen Platte ausgebildet ist und diese der ersten Führungsfläche an der anderen Seite des Schaltelementes gegenüberliegt. Die Platte mit der zweiten Führungsfläche ist dann beispielsweise an einer Schaltgabel aus Blech mittels Schweißen befestigt. Die außenliegende Platte mit der ersten Führungsfläche ist entweder mittels eines Steges oder über die Anschläge, vorzugsweise Stifte, mit der Schaltgabel verbunden. Vorzugsweise ist der Steg die Querverbindung zwischen zwei Schenkeln eines U-Profils, dessen nach innen gewandte Seitenflächen der Schenkel die erste bzw. die zweite Führungsfläche aufweisen. Die Stifte sind in Bohrungen in den Platten bzw. in den Schenkeln eingepresst. Weiter ausgestaltet ist die Erfindung mit einem U-förmig ausgebildeten Steg. Die zum Schaltelement gerichteten Schenkel des Steges bilden dabei ein Paar der Anschläge.

Schließlich ist mit einer Ausgestaltung der Erfindung vorgesehen, dass das Schaltelement eine Schaltschiene ist. Die Schaltgabel ist jedoch auch mittels der erfindungsgemäßen Befestigung an Schaltstangen, Schaltbolzen oder ähnlichen die Schaltgabel verschiebenden Elementen schwenkbar gehalten.

### Kurze Beschreibung der Zeichnungen

Die Erfindung wird nachfolgend anhand von einigen Ausführungsbeispielen näher erläutert. Es zeigen:
- Figur 1: eine Befestigung einer Schaltgabel an einem Schaltelement,
- Figuren 1a bis 1c: alternative Befestigungen der Schaltgabel aus Figur 1,
- Figur 2: die Draufsicht auf die Schaltgabel nach Figur 1 mit der Befestigung im Schnitt entlang der Linie II-II,
- Figur 3: eine weitere Befestigung einer Schaltgabel,
- Figur 4: eine Schnittdarstellung der Befestigung nach Figur 3 entlang der Linie IV-IV,
- Figuren 5a und 5b: das Wirkprinzip der erfindungsgemäßen Befestigung,
- Figur 6: eine weitere schwenkbare Befestigung einer Schaltgabel, die nicht beansprucht wird.
- Figur 7: eine Seitenansicht der Schaltgabel nach Figur 6, teilweise geschnitten,
- Figur 8: einen Schnitt entlang der Linie VIII-VIII der Darstellung aus Figur 7 und
- Figur 9: einen Detailansicht der Befestigung nach Figur 7.

### Detaillierte Beschreibung der Zeichnungen

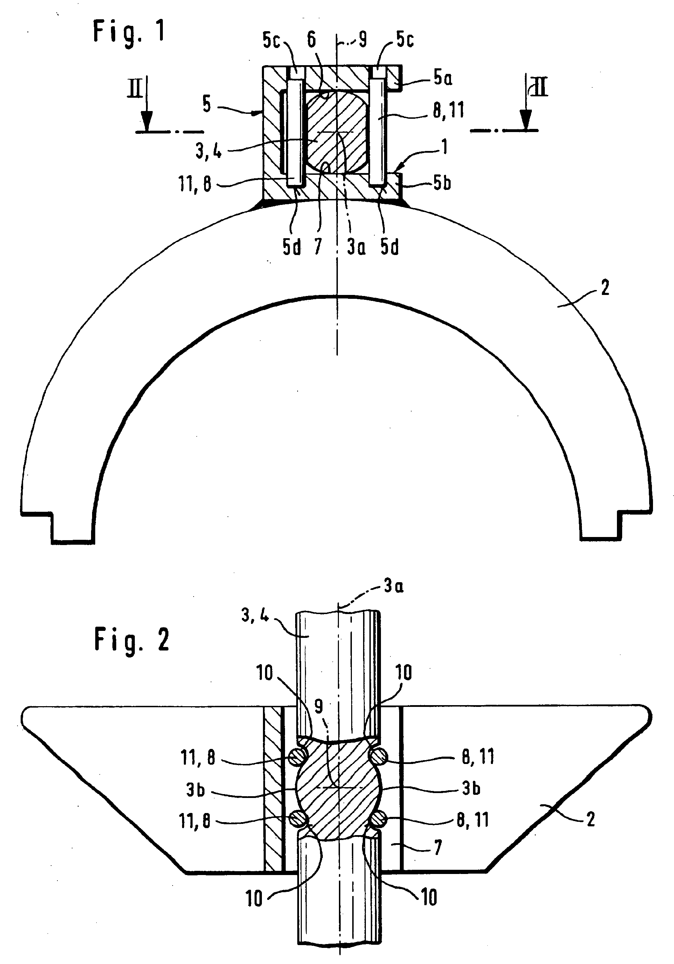

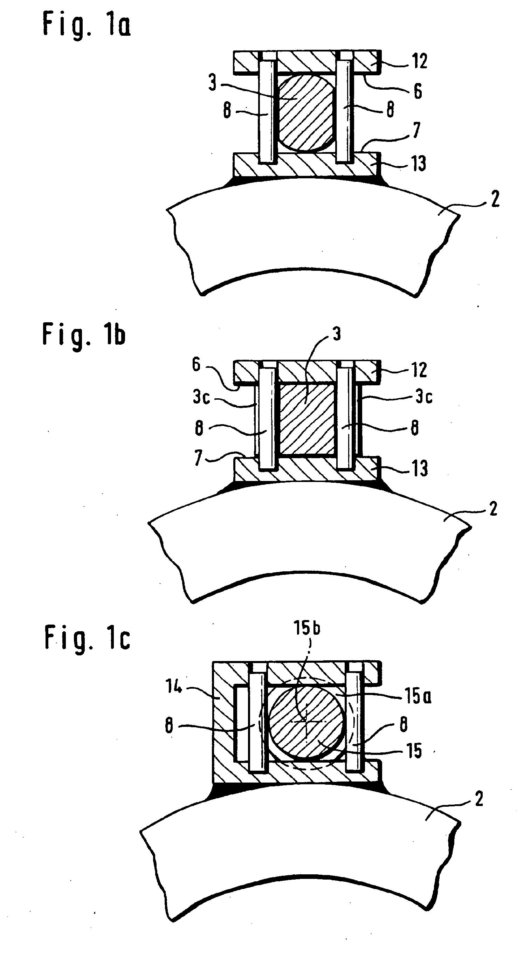

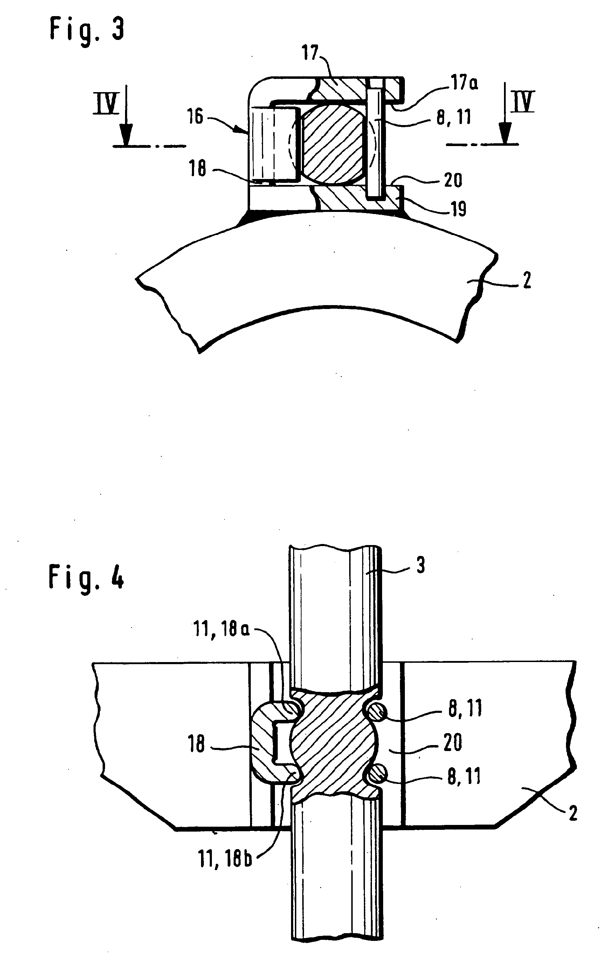

Figur 1 zeigt eine Befestigung 1 einer Schaltgabel 2 an einem entlang seiner Längsachse 3a verschiebbaren Schaltelement 3. Das Schaltelement 3 ist eine Schaltschiene 4. Mit der Schaltgabel 2 ist ein U-Profil 5 verschweißt. Das U-Profil 5 weist an der Innenseite seiner Schenkel 5a und 5b die Führungsflächen 6 bzw. 7 auf. Die Führungsflächen 6 und 7 nehmen die Schaltschiene 4 zwischen sich. Die Schaltgabel 2 ist mittels des U-Profils 5 an der Schaltschiene 4 aufgehängt. In das U-Profil 5 sind in entsprechend angepasste Bohrungen 5c und 5d Stifte 8 eingepresst. Wie aus Figur 2 ersichtlich ist, ist jeweils ein Paar der Stifte 8 seitlich der Schaltschiene 4 angeordnet. Die Stifte 8 sichern die Schaltgabel 2 seitlich und längs fest an dem Schaltelement 3. Dazu greift jeder der Stifte 8 in eine Nut 10 ein. Jede der Nuten 10 ist in die eine Längsrichtung durch eine Flanke 3b an dem Schaltelement 3 begrenzt. Bei längsgerichteten Kräften an der Schaltgabel 2 bzw. an der Befestigung 1 stützt sich jeweils immer ein Anschlag 11 in Form des Stiftes 8 eines jeden der zwei Paare mit den Kräften gleichgerichtet an jeweils einer der Flanken 3b ab, so dass die Schaltgabel 2 mittels der Anschläge 11 längs relativ zu dem Schaltelement 3 unbeweglich gehalten ist. Mit den Mittenachsen der Stifte 8 gleichgerichtete Kräfte an der Schaltgabel 2 bzw. der Befestigung 1 sind über die an dem Schaltelement 3 anliegenden Führungsflächen 6, 7 durch die Schenkel 5a, 5b des U-Profils aufgenommen.

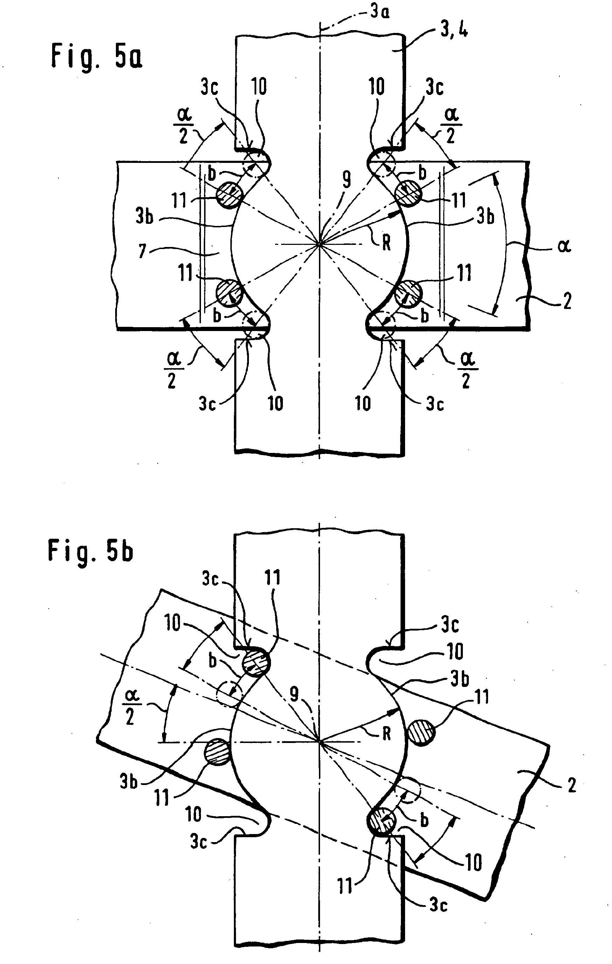

Die Schaltgabel 2 ist um einen geringen Winkel α zu dem Schaltelement 3 um eine Schwenkachse 9 schwenkbar. Mittels der Anschläge 11 ist der Winkel α begrenzt. Die Figuren 5a und 5b verdeutlichen mit einer vergleichsweise vergrößerten und nicht maßstäblichen Darstellung der Ansicht nach Figur 2 das Wirkprinzip der Anschläge 11. In der Darstellung nach Figur 5a ist die Schaltgabel 2 nicht geschwenkt. Jeder der zwei Anschläge 11 eines Paares greift zumindest teilweise in eine der Nuten 10 ein und ist mit einem durch ein Bogenmaß b beschriebenen Spiel zu einem Vorsprung 3c an dem Schaltelement 3 beabstandet. Der Vorsprung 3c begrenzt die Nut 10 in Längsrichtung an einer der Flanke 3b gegenüberliegenden Seite. Mit der maximal um den halben Winkel α aus dieser Stellung schwenkenden Schaltgabel 2 überwindet jeweils einer der Anschläge 11 eines der Paare den Abstand b und schlägt an dem Vorsprung 3c an (Figur 5b). Der Anschlag 11 begrenzt somit den Schwenkwinkel α. Bei dieser Schwenkbewegung bewegt sich jeder der Anschläge 11 an einer der Flanken 3b des Schaltelementes 3 entlang. Die Anschläge 11 nehmen die Flanken 3b des Schaltelementes 3 dabei möglichst spielfrei zwischen sich. Die Flanken 3b sind bogenförmig in Richtung der Anschläge 11 ausgewölbt. Die Wölbung ist dabei durch einen rechtwinklig von der Schwenkachse 9 abgehenden Radius R beschrieben. Je nach Ausführung der Befestigung 1 ist die Flanke 3b durch die Oberfläche eines Kugelsegmentes oder durch die Oberfläche eines Zylindersegmentes beschrieben bzw. ist linienförmig ausgebildet. Die erste Führungsfläche 6 und die zweite Führungsfläche 7 führen das Schaltelement 3 während seiner Schwenkbewegung exakt.

Aus der geschwenkten Lage nach Figur 5b ist die Schaltgabel 2 um jeden beliebigen anteiligen Winkelbetrag < α des Winkels α oder aber bis maximal um den Winkel α schwenkbar. Der Schwenkwinkel α ist dann durch jeweils einen an jeweils einem der Vorsprünge 3c anschlagenden der Anschläge 11 eines jeden der Paare begrenzt.

Die Figuren 1a bis 1c zeigen alternative Ausgestaltungen der Befestigung 1. In Figur 1a ist die erste Führungsfläche 6 an einer Platte 12 ausgebildet. Die Platte 12 ist mittels der Stifte 8 mit einer Grundplatte 13 verbunden. Die Grundplatte 13 ist mit der Schaltgabel 2 verschweißt und weist die zweite Führungsfläche 7 auf. Die den Führungsflächen 6, 7 zugewandte Kontur des Schaltelementes 3 ist im Querschnitt in Richtung der Platten 12, 13 gewölbt ausgeführt. In der Darstellung nach Figur 1b weist das Schaltelement 3 einen rechteckigen Querschnitt auf, wodurch die an den Führungsflächen 6, 7 anliegenden Oberflächen des Schaltelementes 3 zueinander und zu den Führungsflächen 6, 7 planparallel sind. In Figur 1c ist eine Befestigung 14 für die Schaltgabel 2 an einem Schaltelement 15 mit rundem Querschnitt beschrieben. Die Befestigung 14 ist durch ein U-Profil gebildet, in dem die Stifte 8 gehalten sind. Die Stifte 8 führen seitlich an dem Schaltelement 15 vorbei und greifen dabei in eine Ringnut 15a des Schaltelementes 15 zumindest teilweise ein. Mit einer derartigen Anordnung lässt sich ein fertigungs- bzw. montagebedingter Versatz zwischen der Längsmittelachse einer nicht dargestellten Getriebewelle und der Längsmittelachse 15b ausgleichen, da die Befestigung 14 um die Längsmittelachse 15b des Schaltelementes 15 schwenkbar ist.

Die Figuren 3 und 4 zeigen eine weitere Ausführungsform einer erfindungsgemäßen Befestigung 16. An einer Platte 17 ist die erste Führungsfläche 17a ausgebildet. Die Platte 17 ist einstückig mit einem Steg 18 und einer mit der Schaltgabel 2 verschweißten Grundplatte 19 ausgebildet. Die Grundplatte 19 weist die zweite Führungsfläche 20 auf. Die Befestigung 16 ist mit zwei Paaren der Anschläge 11 versehen, wobei ein Paar durch die Stifte 8 und das andere Paar durch aus dem Steg in Richtung des Schaltelementes 3 abgebogenen Schenkel 18a und 18b gebildet ist.

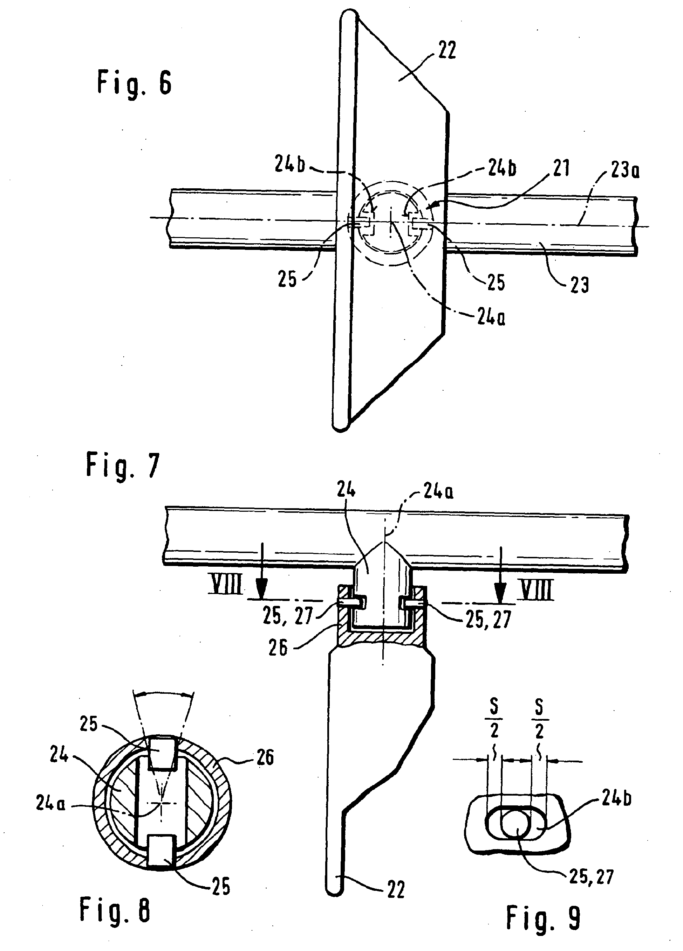

Die Figuren 6 bis 9 zeigen eine Befestigung 21 einer Schaltgabel 22 an einer entlang seiner Längsachse 23a verschiebbaren Schaltschiene 23. Die Befestigung 21 hält die Schaltgabel 22 längs fest und um einen begrenzten Winkel um eine Schwenkachse 24a schwenkbar an der Schaltschiene 23. Zumindest ein um die Schwenkachse 24a schwenkbarer Anschlag 25 begrenzt den Schwenkwinkel der Schaltgabel 22. Die Schwenkachse 24a ist die Mittelachse eines zu der Schaltschiene 23 festen sowie quer zumindest teilweise von der Schaltschiene 23 abragenden sowie zylindrisch ausgebildeten Schwenkbolzens 24. Die Schaltgabel 22 umgreift mit einem hohlzylindrischen Ansatz 26 den Schwenkbolzen 24 und sitzt auf diesem um die Schwenkachse 24a schwenkbar. Dabei ist die Schaltgabel 22 längs zur Schwenkachse 24a mit den quer zur Schwenkachse 24a aus dem Ansatz 26 hervorstehenden Anschlägen 25 an dem Schwenkbolzen 24 gehalten. Jeder der Anschläge 25 greift in ein radial in den Schwenkbolzen 24 führendes Loch 24b ein. Das Loch 24b ist ein Langloch. Die fest in dem Ansatz 26 sitzenden Anschläge 25 sind in dem Loch 24b mit einem durch den begrenzten Schwenkwinkel vorgegebenen Spiel S zu den Wandungen des Langloches in Umfangsrichtung frei bewegbar aufgenommen (Figur 9). Die Anschläge 25 sind zylindrische Stifte 27, die fest in einem zylindrischen Loch des Ansatzes 26 aufgenommen sind und sich einander gegenüberliegen. Der Schwenkbolzen 24 ist bevorzugt mit der Schaltschiene 23 verschweißt.

### Bezugszeichen

- 1: Befestigung
- 2: Schaltgabel
- 3: Schaltelement
- 3a: Längsachse
- 3b: Flanke
- 3c: Vorsprung
- 4: Schaltschiene
- 5: U-Profil
- 5a: Schenkel
- 5b: Schenkel
- 5c: Bohrung
- 5d: Bohrung
- 6: Führungsfläche
- 7: Führungsfläche
- 8: Stift
- 9: Schwenkachse
- 10: Nut
- 11: Anschlag
- 12: Platte
- 13: Grundplatte
- 14: Befestigung
- 15: Schaltelement
- 15a: Ringnut
- 15b: Längsmittelachse
- 16: Befestigung
- 17: Platte
- 17a: Führungsfläche
- 18: Steg
- 18a: Schenkel
- 18b: Schenkel
- 19: Grundplatte
- 20: Führungsfläche
- 21: Befestigung
- 22: Schaltgabel
- 23: Schaltschiene
- 23a: Längsachse
- 24: Schwenkbolzen
- 24a: Schwenkachse
- 24b: Loch
- 25: Anschlag
- 26: Ansatz
- 27: Stift

## Patentansprüche

1. Befestigung (1, 14, 16) einer Schaltgabel (2) an einem entlang einer Längsachse (3a, 15b) verschiebbaren Schaltelement (3, 15), wobei die Befestigung (1, 14, 16) die Schaltgabel (2) längs fest sowie zu einer Schwenkachse (9) schwenkbar an dem Schaltelement (3, 15) hält und die Befestigung (1, 14, 16) zumindest
- aus einer zur Schaltgabel (2) festen sowie an einer der Schaltgabel (2) abgewandten Seite des Schaltelementes (3, 15) anliegenden ersten Führungsfläche (6, 17a),
- aus einer an dem Schaltelement (3, 15) gegenüber der ersten Führungsfläche (6, 17a) anliegenden sowie zur Schaltgabel (2) festen zweiten Führungsfläche (7, 20) und
- aus wenigstens einem seitlich an dem Schaltelement (3, 15) angeordneten, dabei zu der Schwenkachse (9) parallel verlaufenden, sowie zu zumindest einer der Führungsflächen (6, 7, 17a, 20) festen Anschlag (11)
gebildet ist, und wobei zwischen einer dem Anschlag (11) zugewandten Fläche des Schaltelementes und dem Anschlag (11) ein Spiel vorgesehen ist, wodurch der Anschlag (11) um einen begrenzten Winkel um die Schwenkachse schwenkbar ist und wodurch die Befestigung (1, 14, 16) die Schaltgabel (2) um die Schwenkachse (9) relativ zu dem Schaltelement (3, 15) um den begrenzten Winkel schwenkbar führt, **dadurch gekennzeichnet, dass** die Befestigung (1, 14, 16) zwei Paare sich einander gegenüberliegender sowie das Schaltelement (3, 15) zwischen sich nehmender der Anschläge (11) aufweist, wobei die Anschläge (11) eines Paares längs nebeneinander und jeder einzelne der Anschläge (11) mit gleichem Abstand zu der Schwenkachse (9) angeordnet ist und dass zumindest jeweils einer der Anschläge (11) eines Paares wenigstens teilweise in eine zumindest seitlich des Schaltelementes (3, 15) eingebrachte Nut (10, 15a) des Schaltelementes (3, 15) eingreift, wobei der Anschlag (11) in der Nut (10, 15a) an jeweils einer zumindest linienförmig ausgebildeten sowie in Richtung des Anschlages (11) konvexen und dabei durch einen rechtwinklig von der Schwenkachse abgehenden Radius beschriebenen Flanke (3b) des Schaltelementes (3, 15) entlang zu dem Schaltelement (3, 15) schwenkbar ist.

2. Befestigung nach Anspruch 1, **dadurch gekennzeichnet, dass** jedem der Anschläge (11) ein Vorsprung (3c) an dem Schaltelement (3, 15) gegenüberliegt, gegen den der Anschlag (11) maximal um ein durch das Spiel vorgegebenes Bogenmaß schwenkbar ist.

3. Befestigung nach Anspruch 1, **dadurch gekennzeichnet, dass** der Anschlag (11) ein zylindrisch ausgebildeter Stift (8) ist, wobei die Mittelachse des Stiftes (8) zu der Schwenkachse (9) parallel verläuft.

4. Befestigung nach Anspruch 1, **dadurch gekennzeichnet, dass** die Schwenkachse (9) quer zur Längsachse (3a, 15b) verlaufend, die Längsachse (3a, 15b) schneidet.

5. Befestigung nach Anspruch 1, **dadurch gekennzeichnet, dass** die erste Führungsfläche (6, 17a) und die zweite Führungsfläche (7, 20) plan ausgebildet sind.

6. Befestigung nach Anspruch 5, **dadurch gekennzeichnet, dass** die Führungsflächen (6, 7, 17a, 20) jeweils an einer im Querschnitt in Richtung der Führungsflächen (6, 7, 17a, 20) konvex gewölbten Kontur des Schaltelementes (3, 15) anliegen.

7. Befestigung nach Anspruch 5, **dadurch gekennzeichnet, dass** die Führungsflächen (6, 7) jeweils an einer zu den Führungsflächen (6, 7) planparallelen Kontur des Schaltelementes (3) anliegen.

8. Befestigung nach Anspruch 5, **dadurch gekennzeichnet, dass** zumindest die erste Führungsfläche (6, 17a) an einer Platte (12, 17) ausgebildet ist und dass jeder der Anschläge (11) an zylindrisch ausgebildeten Stiften (8) ausgebildet ist, wobei die Mittelachse des Stiftes (8) zu der Schwenkachse (9) parallel verläuft und dass die Platte (12, 17) mittels zumindest zwei der Stifte (8) an der Schaltgabel (2) befestigt ist.

9. Befestigung nach Anspruch 1, **dadurch gekennzeichnet, dass** die erste Führungsfläche (6, 17a) an einer Platte (12, 17) ausgebildet ist, und dass die Platte (12, 17) mittels eines von der Schaltgabel (2) ausgehenden sowie seitlich an dem Schaltelement vorbeiverlaufenden und in die Platte (12, 17) übergehenden Steges (18) an der Schaltgabel (2) befestigt ist.

10. Befestigung nach Anspruch 9, **dadurch gekennzeichnet, dass** der Steg (18) eines der Paare aufweist.

11. Befestigung nach Anspruch 1, **dadurch gekennzeichnet, dass** das Schaltelement (3) eine Schaltschiene (4) ist.

## Claims

1. Fixing means (1, 14, 16) for fixing a gear shift fork (2) to a gear shift element (3, 15) displaceable along a longitudinal axis (3a, 15b), the fixing means (1, 14, 16) holding the gear shift fork (2) on the gear shift element (3, 15) fixedly in the longitudinal direction and swivellably relative to a swivel axis (9) and the fixing means (1, 14, 16) being formed at least
- from a first guide face (6, 17a) fixed relative to the gear shift fork (2) and resting against a side of the gear shift element (3, 15) remote from the gear shift fork (2),
- from a second guide face (7, 20) resting against the gear shift element (3, 15) opposite the first guide face (6, 17a) and fixed relative to the gear shift fork (2), and
- from at least one limit stop (11) arranged to the side of the gear shift element (3, 15), extending parallel to the swivel axis (9) and fixed to at least one of the guide faces (6, 7, 17a, 20),
and play being provided between a face of the gear shift element facing the limit stop (11) and the limit stop (11), whereby the limit stop (11) is swivellable over a limited angle about the swivel axis and whereby the fixing means (1, 14, 16) guides the gear shift fork (2) swivellably about the swivel axis (9) over the limited angle relative to the gear shift element (3, 15), **characterized in that** the fixing means (1, 14, 16) comprises two pairs of mutually opposing limit stops (11) accommodating the gear shift element (3, 15) between them, the limit stops (11) of one pair being arranged next to one another in the longitudinal direction and each individual one of the limit stops (11) being arranged at the same distance from the swivel axis (9), and **in that** in each case at least one of the limit stops (11) of a pair engages at least partially in a groove (10, 15a) formed in the gear shift element (3, 15) at least to the side of the gear shift element (3, 15), the limit stop (11) in the groove (10, 15a) being swivellable relative to the gear shift element (3, 15) in each case along a flank (3b) of the gear shift element (3, 15) which is of at least linear construction and is convex in the direction of the limit stop (11) and is described by a radius extending at right angles from the swivel axis.

2. Fixing means according to Claim 1, **characterized in that** a projection (3c) on the gear shift element (3, 15) faces each of the limit stops (11), the limit stop (11) being swivellable towards said projection (3c) at most by an arc size predetermined by the play.

3. Fixing means according to Claim 1, **characterized in that** the limit stop (11) is a pin (8) of cylindrical construction, the central axis of the pin (8) extending parallel to the swivel axis (9).

4. Fixing means according to Claim 1, **characterized in that** the swivel axis (9), extending transversely to the longitudinal axis (3a, 15b), intersects with the longitudinal axis (3a, 15b).

5. Fixing means according to Claim 1, **characterized in that** the first guide face (6, 17a) and the second guide face (7, 20) are of flat construction.

6. Fixing means according to Claim 5, **characterized in that** the guide faces (6, 7, 17a, 20) each rest against a contour of the gear shift element (3, 15) which, in cross-section, is curved convexly in the direction of the guide faces (6, 7, 17a, 20).

7. Fixing means according to Claim 5, **characterized in that** the guide faces (6, 7) each rest against a contour of the gear shift element (3) which is plane-parallel to the guide faces (6, 7).

8. Fixing means according to Claim 5, **characterized in that** at least the first guide face (6, 17a) is formed on a plate (12, 17) and **in that** each of the limit stops (11) is formed using pins (8) of cylindrical construction, the central axis of the pin (8) extending parallel to the swivel axis (9), and **in that** the plate (12, 17) is fixed to the gear shift fork (2) by means of least two of the pins (8).

9. Fixing means according to Claim 1, **characterized in that** the first guide face (6, 17a) is formed on a plate (12, 17), and **in that** the plate (12, 17) is fixed to the gear shift fork (2) by means of a web (18) extending from the gear shift fork (2) laterally past the gear shift element and developing into the plate (12, 17).

10. Fixing means according to Claim 9, **characterized in that** the web (18) comprises one of the pairs.

11. Fixing means according to Claim 1, **characterized in that** the gear shift element (3) is a gear shift rail (4).

## Revendications

1. Fixation (1, 14, 16) d'une fourchette de commande (2) sur un élément de commande (3, 15) pouvant coulisser le long d'un axe longitudinal (3a, 15b), la fixation (1, 14, 16) maintenant la fourchette de commande (2) sur l'élément de commande (3, 15) de façon fixe dans le sens longitudinal et de façon basculante par rapport à un axe de pivotement (9) et la fixation (1, 14, 16) étant formée au moins des éléments suivants;
- une première surface de guidage (6, 17a) fixe par rapport à la fourchette de commande (2) et s'appuyant sur un côté de l'élément de commande (3, 15) opposé à la fourchette de commande (2),
- une seconde surface de guidage (7, 20) s'appuyant sur l'élément de commande (3, 15) par rapport à la première surface de guidage (6, 17a) et fixe par rapport à la fourchette de commande (2) et
- au moins une butée (11) disposée latéralement sur l'élément de commande (3, 15), agencée parallèlement ici à l'axe de pivotement (9) et fixe par rapport à au moins une des surfaces de guidage (6, 7, 17a, 20), et moyennant quoi un jeu est prévu entre une surface de l'élément de commande tournée vers la butée (11) et la butée (11), la butée (11) pouvant basculer d'un angle limité autour de l'axe de pivotement et la fixation (1, 14, 16) guidant la fourchette de commande (2) de façon à pouvoir basculer de l'angle limité autour de l'axe de pivotement (9) par rapport à l'élément de commande (3, 15), **caractérisée en ce que** la fixation (1, 14, 16) présente deux paires de butées (11) se faisant face et enfermant entre elles l'élément de commande (3, 15), les butées (11) d'une paire étant disposées dans le sens longitudinal l'une à côté d'autre et chacune des butées (11) étant disposée à une même distance de l'axe de pivotement (9), et **en ce qu'**à chaque fois au moins l'une des butées (11) d'une paire s'engage au moins partiellement dans une rainure (10, 15a) de l'élément de commande (3, 15) introduite au moins sur le côté de l'élément de commande (3, 15), la butée (11) pouvant basculer le long de l'élément de commande (3, 15) dans la rainure (10, 15a) sur respectivement un flanc (3b) de l'élément de commande (3, 15), conçu au moins en forme de ligne, convexe en direction de la butée (11) et décrit ici par un rayon partant à angle droit de l'axe de pivotement,.

2. Fixation selon la revendication 1, **caractérisée en ce que** à chacune des butées (11) est opposée à une saillie (3c) sur l'élément de commande (3, 15) par rapport auquel la butée (11) peut basculer au maximum d'une cote d'arc prédéfinie par le jeu.

3. Fixation selon la revendication 1, **caractérisée en ce que** la butée (11) est une goupille (8) de conception cylindrique, l'axe médian de la goupille (8) étant parallèle à l'axe de pivotement (9).

4. Fixation selon la revendication 1, **caractérisée en ce que** l'axe de pivotement (9), agencé transversalement à l'axe longitudinal (3a, 15b), coupe l'axe longitudinal (3a, 15b).

5. Fixation selon la revendication 1, **caractérisée en ce que** la première surface de guidage (6, 17a) et la seconde surface de guidage (7, 20) sont conçues planes.

6. Fixation selon la revendication 5, **caractérisée en ce que** les surfaces de guidage (6, 7, 17a, 20) s'appuient chacune sur un contour de l'élément de commande (3, 15), de courbure convexe en section en direction des surfaces de guidage (6, 7, 17a, 20).

7. Fixation selon la revendication 5, **caractérisée en ce que** les surfaces de guidage (6, 17) s'appuient chacune sur un contour de l'élément de commande (3), plan et parallèle aux surfaces de guidage (6, 7).

8. Fixation selon la revendication 5, **caractérisée en ce qu'**au moins la première surface de guidage (6, 17a) est réalisée sur une plaque (12, 17) et **en ce que** chacune des butées (11) est réalisée sur des goupilles (8) de conception cylindrique, l'axe médian de la goupille (8) étant agencé parallèlement à l'axe de pivotement (9) et **en ce que** la plaque (12, 17) est fixée au moyen d'au moins deux des goupilles (8) sur la fourchette de commande (2).

9. Fixation selon la revendication 1, **caractérisée en ce que** la première surface de guidage (6, 17a) est réalisée sur une plaque (12, 17) et **en ce que** la plaque (12, 17) est fixée sur la fourchette de commande (2) au moyen d'une nervure (18) partant de la fourchette de commande (2), passant latéralement devant l'élément de commande et faisant place à la plaque (12, 17).

10. Fixation selon la revendication 9, **caractérisée en ce que** la nervure (18) présente l'une des paires.

11. Fixation selon la revendication 1, **caractérisée en ce que** l'élément de commande (3) est une tige de commande (4).
